# EUROPEAN PATENT APPLICATION

(11) **EP 3 657 604 A1**
(43) Date of publication of application: **27.05.2020**
(21) Application number: 18208391.5
(22) Date of filing: 26.11.2018
(51) Int. Cl.: H01R 4/2445, H01R 4/2433

(54) **CABLE TERMINATING ASSEMBLY WITH ELECTRICALLY INSULATING CUTTING BLADES**

(71) Applicant: TE Connectivity Germany GmbH, 64625 Bensheim (DE)
(72) Inventor: Leininger, Tobias, 68259 Mannheim (DE); Szelag, Martin, 64404 Bickenbach (DE); Mueller, Franz, 64347 Griesheim (DE); Wiborg, Ole, 55118 Mainz (DE)
(74) Representative: Grünecker Patent- und Rechtsanwälte PartG mbB

(57) **Abstract**

The invention relates to a cable terminating assembly (1) for terminating a cable (8) comprising at least one wire (6). The cable terminating assembly (1) comprises a wire manager (2) with an end face (4) facing in an insertion direction (I) adapted to hold the at least one wire (6) in a predetermined position and a connector housing (10) with a reception opening (12) for receiving at least a part of the wire manager (2) along the insertion direction (I). In order to cut the at least one wire (6) to length without the use of an extra tool, the connector housing (10) is provided with at least one cutting blade (14) for cutting the at least one wire (6) to length formed by an electrically insulating material. By having the at least one cutting blade (14) formed by an electrically insulating material, the at least one cutting blade (14) shears off excessive length of the at least one wire (6) and also electrically insulates the at least one wire (6) in the connector housing (10). Therefore, it is not necessary to provide an insulating feature in addition to the at least one cutting blade (14), which would lead to a bigger cable terminating assembly and an increase in production costs.

## Description

The invention relates to a cable terminating assembly for terminating a cable comprising at least one wire. The cable terminating assembly comprises a wire manager with an end face and a connector housing with a reception opening for receiving at least a part of the wire manager along an insertion direction, wherein the end face faces the insertion direction and is adapted to hold the at least one wire in a predetermined position.

Cable terminating assemblies for terminating a cable comprising at least one wire, in particular multiple twisted wire pairs, often require the at least one wire to be pushed into openings in one end of the connector housing until they contact a terminal of the connector. Excessive length of the at least one wire has to be sheared off and the remaining wire needs to be electrically insulated in order to securely terminate the cable and prevent any short circuit. There is a high demand for a miniaturization and reduction of costs of such a cable terminating assembly.

Therefore, it is the objective of the invention to provide a compact and cost efficient cable terminating assembly.

In accordance with the present invention, the problem is solved by the aforementioned cable terminating assembly, wherein the connector housing comprises at least one cutting blade formed by an insulating material, adapted to cut the at least one wire upon insertion of the wire manager into the reception opening of the connector housing.

By having the at least one cutting blade formed by an insulating material, the at least one cutting blade shears off excessive length of the at least one wire and insulates the at least one wire in the housing. Therefore, it is not necessary to provide an insulating surface in addition to the cutting blade, which would lead to a bigger cable terminating assembly and an increase in production costs. The cable terminating assembly according to the invention provides a compact and cost effective design.

The invention can be further improved by the following features, which are independent of one another in terms of their respective technical effects, and which can be combined arbitrarily.

For example, according to the first aspect of the invention, the connector housing and/or wire manager may comprise an annular shape. In particular, the profile of the connector housing and/or wire manager perpendicular to the insertion direction may comprise an annular shape. The annular shape may equalize the tension exerted onto the connector housing and/or wire manager and may prevent or at least minimise a deformation.

The wire manager may comprise a longitudinal body extending in the insertion direction from the end face to a front face arranged opposite the end face. A tunnel may be provided that extends from the end face to the front face for the insertion of the at least one wire.

The wire manager and/or connector housing may comprise a polygonal shape. The profile perpendicular to the insertion direction may comprise a polygonal shape. For example if the cable comprises four pairs of twisted wires, the wire manager and/or connector housing may comprise an octagonal shape. The pairs of twisted wires may be arranged in a cross formation in that octagonal shape and be held on a side of the octagon. Therefore, the wires are spaced apart from one another preventing an interference between the wires and a wrongful positioning of the wires. However, depending on the amount of wires in the cable, any other polygonal form may be acceptable such as a hexagonal or dodecagonal form.

According to an exemplary embodiment of the invention, one of the wire manager and the connector housing may be provided with a guiding feature extending along the insertion direction and the other may comprise a guiding slot formed complementary to the guiding feature for receiving the at least one guiding feature. Therefore, a correct rotational position between the wire manager and the connector housing can be ensured, so that the at least one wire may be terminated at the right position.

The guiding feature may be a post protruding from a front face of the connector housing counter to the insertion direction. The guiding post may be formed at one side of the polygonal shape. For further stabilisation at least two guiding features and corresponding slots may be provided, which are arranged on opposing sides of the polygonal shape.

According to a further embodiment of the invention, the wire manager may feature at least one wire holder for holding the at least one wire in position. The at least one wire holder ensures that the at least one wire is held in the predetermined position, particularly during insertion of the wire holder into the reception opening of the connector housing.

The at least one wire holder may be formed on the end face of the wire manager and may comprise a slot in which the wire may be inserted. Preferably, the amount of wire holders corresponds to the amount of wires in the cable. Therefore, each wire holder can hold a separate single wire further preventing a wrongful positioning of the wires.

To further ensure the right positioning of each wire, the wire holders may be coded. The wire holders may be visually coded, e.g. colour coded, so that each wire holder can be easily distinguished from the others. The wire holders can be coded correspondingly to the wires, meaning that the colour of the wire holders may correspond to the colour of the wires.

The at least one wire holder may feature at least one retention blade that can at least partially cut into an insulation of the wire. The at least one retention blade may be arranged on a side of the slot. Preferably, both sides of the slot feature such a retention blade. The retention blade partially cuts into the insulation of the wire, so that the holding force of the wire holder is further increased. Therefore, the at least one retention blade may ensure that the at least one wire is securely held in the at least one wire holder.

The at least one retention blade may preferably be formed by an insulating material. In particular, the at least one cutting blade and the at least one retention blade may be formed by the same material.

The at least one wire holder may compromise two U-shaped seats which are spaced apart in a radial direction essentially perpendicular to the insertion direction. Thus, a gap may be provided between the two U-shaped seats for receiving a contact terminal, e.g. an insulation displacement contact, establishing an electrical connection with the wire. The two U-shaped seats may function as a bearing creating a back-pressure for the at least one wire balancing an insertion force, when the at least one wire is pushed against the contact terminal.

A separation column may be provided separating two adjacent wire holders. The separation column may extend in the direction beyond the adjacent wire holders and may comprise a tapered lip. The separation column provides a better and faster handling of the wires, in particular a pair of twisted wires, as it is possible to splice the pair of twisted wires by putting the wires over the separation column after only half of a turn instead of untwisting the wires completely.

The predetermined position in which the at least one wire is held may be located opposite the at least one cutting blade. The at least one wire holder would preferably be located opposite the at least one cutting blade in insertion direction. Each wire holder may be arranged opposite to a cutting blade, so that there exists a corresponding cutting blade to each wire holder.

The at least one wire holder may be radially offset from the at least one cutting blade, preventing any damage to the wire holder and/or cutting blade during insertion. The end face of the wire manager may comprise an outer edge, from which the excessive length of the at least one wire protrudes radially. The outer edge may be provided by the at least one wire holder. The outer edge may form a blade complementary to the cutting blade.

The outer edge may glide past a cutting edge of the at least one cutting blade. The interaction of the cutting edge and outer edge gliding past one another may facilitate the shearing off of the excess length of the at least one wire. Hence, the wire manager and at least one cutting blade, in particular the outer edge and the cutting edge of the at least one cutting blade may form a shearing assembly.

The at least one cutting blade may be formed by an insulating resin material or ceramic material. Preferably the at least one cutting blade may be formed by a nanometre fibre reinforced resin material and/or a glass fibre reinforced resin material. The nanometre fibre reinforcement may increase the elastic modulus of the cutting blade, preventing a deformation of the at least one cutting blade during cutting the at least one wire. Hence, the wear resistance and amount of mating cycles of the cable termination assembly may be increased. The at least one cutting blade may preferably be formed by a nanometre fibre reinforced and/or a glass fibre reinforced resin material with an elastic modulus of about 16000.

In a further embodiment of the invention, the connector housing may comprise at least two cutting blades, which are arranged in different planes distanced from one another in the insertion direction, for cutting at least two wires. By having the at least two cutting blades arranged in two different planes distanced from one another in the insertion direction, the cutting of the at least two wires enables a timely offset. Hence, the insertion force necessary for inserting the wire manager into the reception opening, and cutting the excessive length of the wires, may be reduced. In particular, a cutting force peak may be reduced.

The at least two cutting blades may be arranged adjacent to one another along the circumference of the connector housing. Preferably the at least two cutting blades may be arranged adjacent to one another on a side of the polygonal shape. Thus, the pair of cutting blades arranged in different planes distanced in the insertion direction may be provided for cutting a pair of wires, whereby a different cutting blade cuts each wire with a timely offset.

The at least one cutting blade and the housing may be formed as a monolithic component for an easy and cost effective production in large amounts. The monolithic component may be formed as a moulded part, e.g. injection moulded part.

To further increase the wear resistance of the at least one cutting blade and the number of possible mating cycles of the cable termination assembly, the at least one cutting blade may comprise a cutting edge with a bevel angle of about 90°. A bevel angle of about 90° further prevents a deflection of the at least one cutting blade during shearing off the at least one wire increasing the number of mating cycles of the cable termination assembly.

According to another embodiment of the invention, the connector housing may at least partially further be received in an outer housing, e.g. an outer die cast, to further stabilise the connector housing and prevent a deflection of the connector housing during shearing off the excessive length of the at least one wire.

In the following, the cable termination assembly for terminating a cable with at least one wire according to the invention is explained in greater detail with reference to the accompanying drawings, in which exemplary embodiments are shown.

In the figures, the same reference numerals are used for elements which correspond to one another in terms of their function and/or structure.

According to the description of the various aspects and embodiments, elements shown in the drawings can be omitted if the technical effects of these elements are not needed for a particular application, and *vice versa*: i.e. elements that are not shown or described with reference to the figures but are described above can be added if the technical effect of those particular elements is advantageous in a specific application.

In the figures:
- Fig. 1: shows a schematic perspective view of an embodiment of a cable terminating assembly according to the invention;
- Fig. 2: shows a schematic profile view of the cable terminating assembly according to the invention;
- Fig. 3: shows a schematic perspective view of a wire manager according to the invention;
- Fig. 4: shows a schematic perspective view of a wire manager according to the invention holding multiple wires;
- Fig. 5: shows a schematic perspective view of a connector housing according to the invention; and
- Fig. 6: shows a schematic cut view of the cable terminating assembly according to the invention.

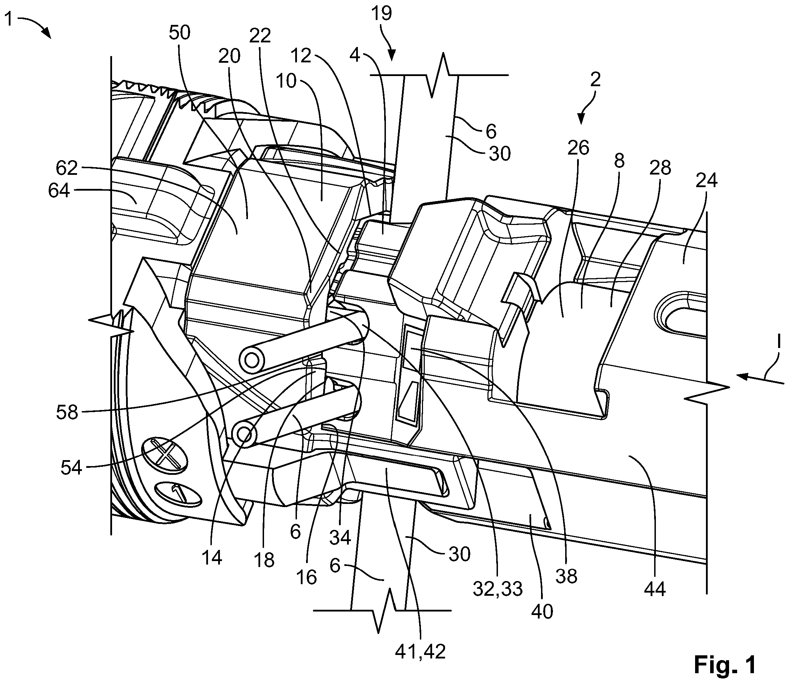

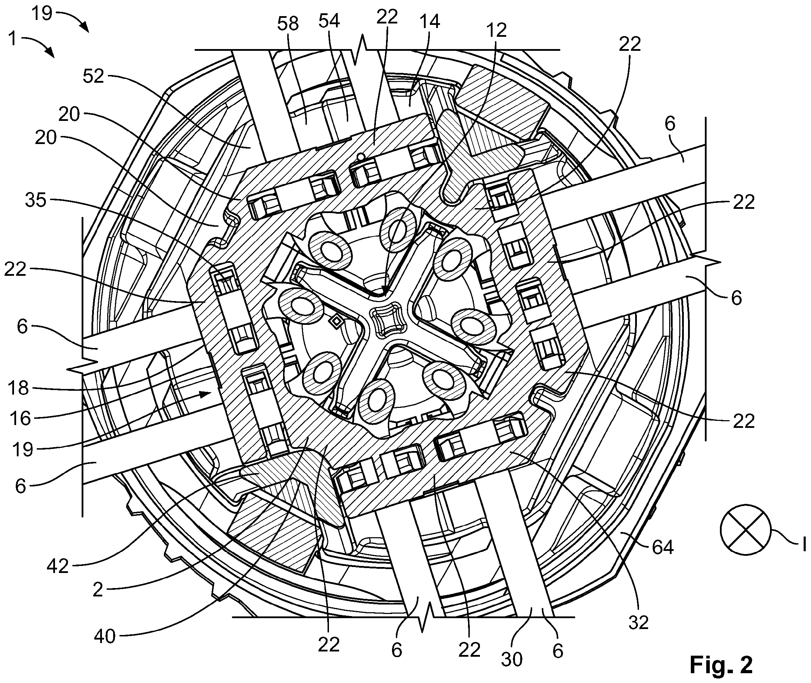

Fig. 1 shows a schematic perspective view of a cable terminating assembly 1 according to the invention and Fig. 2 shows a profile view of the inventive cable terminating assembly 1.

The cable terminating assembly 1 comprises a wire manager 2 with an end face 4 facing in an insertion direction I adapted to hold a wire 6 of a cable 8 in a predetermined position. The cable terminating assembly 1 further comprises a connector housing 10 with a reception opening 12 for receiving at least a part of the wire manager 2 along the insertion direction I.

In this exemplary embodiment, the cable 8 comprises four pairs of twisted wires 6 wherein the wires 6 have been untwisted and the wire manager 2 holds each wire 6 in a predetermined position on the end face 4.

The wires 6 protrude radially form the end face 4 and have to be cut to length when inserting the wire manager 2 into the connector housing 10. For this, the connector housing 10 is provided with cutting blades 14 arranged correspondingly to the predetermined positions of the wires 6. During the insertion, the cutting blades 14 shear off the excessive length of the wires 6. The cutting blades 14 are formed by an electrically insulating material, such as an insulating resin material, so that the wires 6 that have been cut to length by the cutting blades 14 of the connector housing 10 are further electrically insulated, rendering the need for a further insulation feature unnecessary.

As can be seen in Fig. 2, which shows a profile view of the cable terminating assembly 1 from the perspective of the insertion direction I. The excesses of the length of the wires 6 is sheared off by an interaction between an outer edge 16 of the end face 4 and a cutting edge 18 of the cutting blades 14 that glide passed each other when inserting the wire manager 2 into the reception opening 12 of the connector housing 10. Hence, the outer edge 16 and the cutting edge 18 form a shearing assembly 19.

Both the connector housing 10 and the wire manager 2 comprise an annular shape, more specifically a polygonal shape in the form of a octagon 20. Each pair of twisted wires 6 is positioned on a side 22 of the octagon 20 arranged essentially perpendicular to the other sides 22, so that the pairs of twisted wires 6 are positioned in a cross formation and distanced from one another reducing the possibility of a wrongful positioning of the wires 6. In other words, a pair of twisted wires is arranged in every second side 22 of the octagon, so that the adjacent pairs of twisted wires 6 along the circumference are essentially perpendicular to one another.

In addition to the facilitated correct positioning of the wires, the annular shape, in particular the octagonal shape 20 of the connector housing 10 may increase the tension equalization capabilities of the connector housing 10. Due to the annular and/or polygonal shape an even force flow is acquired, during the insertion of the wire manager 2 into the reception opening 12. The annular shape and/or polygonal shape may prevent and/or minimise a deflection of the cutting blades 14 during the insertion of the wire manager 2 into the reception opening 12.

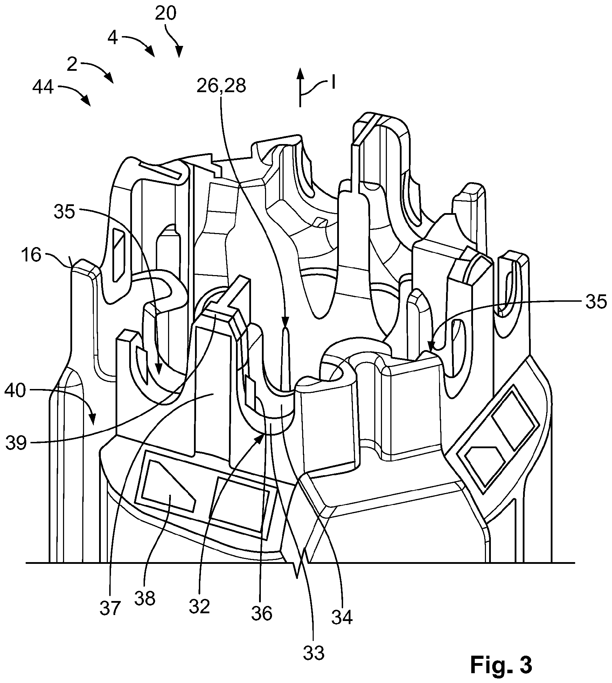

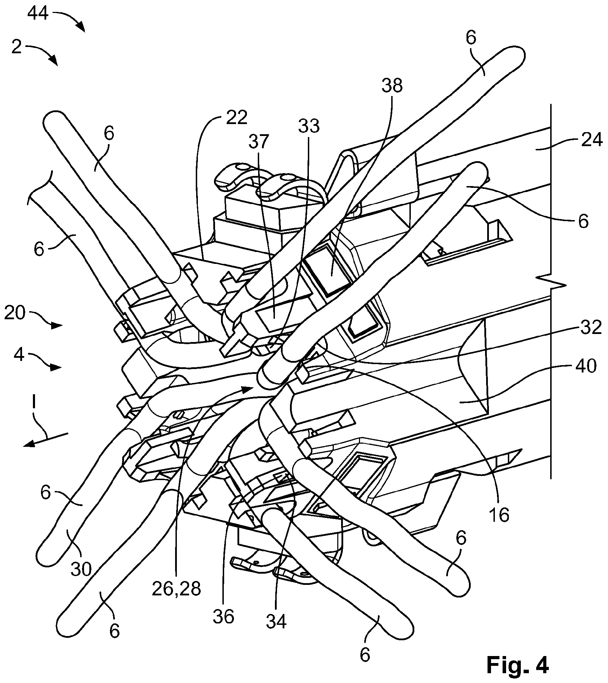

The wire manager 2 is explained in more detail with reference to Fig. 3 and Fig. 4, which show a perspective view of the wire manager 2 according to the invention. In Fig. 4 the wire manager 2 is shown holding multiple wires 6 of a cable 8.

The wire manager 2 comprises a longitudinal body 24 extending essentially parallel to the insertion direction I from the end face 4 to a front face (not shown). A cable tunnel 26 for inserting the cable 8 with the at least one wire 6 extends from the end face 4 to the front face in the form of a through hole 28. The cable 8 can be inserted into the cable tunnel 26, whereby an insulation of the cable 8 is removed prior to inserting said cable 8. The cable 8 may comprise multiple different wires 6, preferably pairs of twisted wires 6. Free ends 30 of the wires 6 protrude from the cable tunnel 26 at the end face 4 and are bent essentially perpendicularly, so that the free ends 30 of the wires 6 extend essentially parallel to the end face 4 of the wire manager 2. The excessive length of the wires 6 extend beyond the outer circumference of the end face 4 and needs to be sheared off, during insertion of the wire manager 2 into the connector housing 10.

Essentially U-shaped wire holders 32 are provided on the end face 4 of the wire manager 2 for holding the wires 6 in the predetermined position. For each wire 6 a corresponding wire holder 32 is provided. Two wire holders 32 are arranged adjacent to one another on a side 22 along the circumference of the polygonal shape, in this exemplary embodiment the octagon 20. Four pairs of wire holders 32 are arranged in a rectangular arrangement, i.e. every second side 22 of the octagon is provided with a pair of wire holders 32. Therefore, a pair of wires can be positioned on one side 22 of the octagon 20, whereby each wire 6 of the pair is held by a different wire holder 32.

The wire holders 32 may comprise a slot 34 in which the wires 6 may be seated. For further increasing the holding force with which the wires 6 are held in the predetermined position, the wire holders 32 may feature retention blades 36. The retention blades 36 are adapted to at least partially cut into an insulation of the wires 6 to further secure the fastening of the wires 6 to the wire manager 2. The retention blades 36 are preferably arranged on each side of the slot 34. Hence, the wire holders 32 may be formed similarly to an insulation displacement contact. As the retention blades 36 are not intended for forming an electrical connection, the retention blades 36 do not necessarily need to cut through the insulation of the wires 6 so that they contact the conductive cores of the wires 6. Quite to the contrary an electrical connection between the retention blades 36 and the wires 6 is not desired. Therefore, an insulating material such as a glass fibre reinforced resin material preferably forms the retention blades 36 and/or the retention blades 36 only partially cut into the insulation of the wires 6.

The wire holders 32 comprise two U-shaped seats 33, which are radially distanced from one another, so that a gap 35 is formed between the two seats 33. The gap 35 may be adapted to receive a contact terminal (not shown) arranged in the connector housing 10 to electrically contact the wires 6. The contact terminal may for example be formed as an insulation displacement contact with conductive blades that cut through the insulation of the wires 6 and electrically contact the conductive core.

A separation column 37 extending in the insertion direction I beyond the wire holders 32 may separate the adjacent wire holders 32 arranged on the same side 22. The separation column 37 may comprise a tapered tip 39 and may be used for the separation of twisted wires. This provides a better and faster handling, as normally one needs to untwist the wire pairs completely. With the separation column 37 it is possible to splice the pair by putting the wires 6 over the separation column 37 after only half a turn.

Coding features 38, such as a colour scheme and/or symbols, may be provided in order to determine the position in which the different wires have to be held. The coding features 38 may be provided on each side 22 of the octagon 20 which comprise wire holders 32.The coding features 38 may ensure a correct positioning of the different wires 6 and may further serve to fool proof the cable terminating assembly 1.

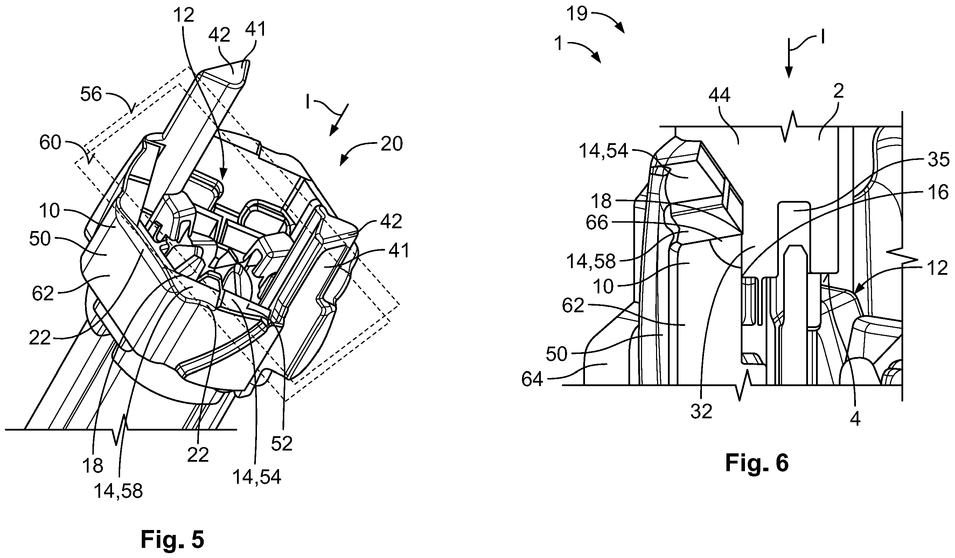

On two opposing sides 22 of the octagon 20, which are not provided with wire holders 32, a guiding slot 40 may be formed. The guiding slot 40 may extend along the insertion direction I and may be open at the end face 4 for receiving a complementary formed guiding feature 41, e.g. a guiding post 42 (see Fig. 1 and 5). Hence, the rotational position in which the wire manager 2 may be inserted into the reception opening 12 is predetermined and it may be ensured that the wires 6 are terminated in the correct position.

The wire manager 2 may be preferably formed as a monolithic part 44, e.g. as a moulded, in particular injection moulded piece. Preferably, a nanometre and/or glass fibre reinforced material with a high elastic modulus of about 16000 forms the monolithic part 44.

In the following, the connector housing 10 according to an exemplary embodiment is described in detail with reference to Fig. 5. Fig. 5 shows a perspective view of an inventive connector housing 10.

The connector housing 10 comprises an annular shaped, particularly an octagonal shaped sleeve 50 surrounding the reception opening 12 for at least partially receiving the wire manager 2 in the insertion direction I.

In the reception opening 12 contact terminals (not shown) for electrically contacting the wires 6 may be provided. The contact terminals may be formed as insulation displacement contacts and be arranged opposite to the gaps 35 on the end face 4 of the wire manager 2.

The reception opening 12 may be formed complementary to the end face 4 of the wire manager 2, so that the wire manager 2 the end face 4 may be fittingly inserted into the reception opening 12.

The cutting blades 14 are formed on a front face 52 of the sleeve 50 opposite the predetermined position of the wires 6 in the insertion direction I. Preferably the number and arrangement of the cutting blades 14 corresponds to the number and arrangement of the wire holders 32.

Guiding posts 42 extend against the insertion direction I from the front face 52 correspondingly to the guiding slots 40 of the wire manager 2. Therefore, the rotational position of the connector housing 10 and the wire manager 2 relative to one another may be determined. The wire manager 2 may be inserted in two different rotational positions, wherein in one position the wire manager 2 is turned 180 degree relative to the other position.

A pair of cutting blades 14 is arranged on the same side 22 of the octagon 20. In order to reduce the cutting force peak, a first cutting blade 54 of the pair is arranged in a first plane 56 essentially perpendicular to the insertion direction I and a second cutting blade 58 of the pair is arranged in a second plane 60 distanced from the first plane 56 in the insertion direction I. The first and second cutting blades 54, 58 may be arranged adjoining to one another along the circumference of the sleeve 50. Consequently, during the insertion of the wire manager 2 a timely offset is provided for shearing the adjacent wires 6. Hence, the insertion force peak may be reduced.

The connector housing 10 may be formed as a monolithic component 62. The connector housing 10, in particular the cutting blades 14 may be formed of a glass fibre reinforced resin material with a high elastic modulus of about 16000. A high elastic modulus may prevent a deformation of the cutting blades 14 and therefore increase the wear resistance and number of possible mating cycles. The annular-shaped form may further increase the wear resistance, since the annular shape promotes the tension equalisation and further prevents a deflection of the cutting blades 14.

As can be seen in Fig.1 the connector housing 10 may at least partially be encased in an second outer housing 64, e.g. a die cast part, for further stabilising the connector housing 10.

Fig. 6 displays a schematic cut view of an inventive cable terminating assembly 1.

The cutting blade 14 comprises a cutting edge 18 formed on the front face 52 of the sleeve 50 facing the end face 4 of the wire manager 2. The cutting edge 18 glides past the outer edge 16 of the end face 4. The interaction between the cutting edge 18 and the outer edge 16 leads to the shearing of the excessive part of the wire 6.

In order to further increase the wear resistance of the cable terminating assembly 1, in particular of the connector housing 10, the cutting edge 18 may comprise a bevel angle 66 of about 90°.

By having the cutting blades 14 formed of an electrically insulating material, the cutting blades both cut the wires 6 to length and electrically insulate the wires 6. In this exemplary embodiment, only two parts, the wire manager 2 and the connector housing 10 are necessary to cut eight wires 6.

### Reference numerals

- 1: cable terminating assembly
- 2: wire manager
- 4: end face of wire manager
- 6: wire
- 8: cable
- 10: connector housing
- 12: reception opening
- 14: cutting blade
- 16: outer edge
- 18: cutting edge
- 19: shearing assembly
- 20: octagon
- 22: side of octagon
- 24: longitudinal body
- 26: cable tunnel
- 28: through hole
- 30: free end
- 32: wire holder
- 33: U-shaped seat
- 34: slot
- 35: gap
- 36: retention blade
- 37: separation column
- 38: coding feature
- 39: tip of separation column
- 40: guiding slot
- 41: guiding feature
- 42: guiding post
- 44: monolithic part
- 50: sleeve
- 52: front face
- 54: first cutting blade
- 56: first plane
- 58: second cutting blade
- 60: second plane
- 62: monolithic component
- 64: outer housing
- 66: bevel angle

- I: insertion direction

## Claims

1. Cable terminating assembly (1) for terminating a cable (8) comprising at least one wire (6), comprising:
a wire manager (2) with an end face (4) and
a connector housing (10) with a reception opening (12) for receiving at least a part of the wire manager (2), wherein the end face faces in the insertion direction (I) and is adapted to hold the at least one wire (6) in a predetermined position along the insertion direction (I),
**characterised in that**
the connector housing (10) comprises at least one cutting blade (14) formed by an electrically insulating material adapted to cut the at least one wire (6) upon insertion of the wire manager (2) into the connector housing (2).

2. Cable terminating assembly (1) according to claim 1, **characterised in that** the wire manager (2) and/or connector housing (10) comprises an annular shape.

3. Cable terminating assembly (1) according to claim 2, **characterised in that** the wire manager (2) and/or connector housing (10) comprises a polygonal shape.

4. Cable terminating assembly (1) according to any one of claims 1 to 3, **characterised in that** at least one of the wire manager (2) and connector housing (10) is provided with at least one guiding feature (41) extending essentially parallel to the insertion direction (I) and the other is provided with at least one complementary formed guiding slot (40).

5. Cable terminating assembly (1) according to any one of claims 1 to 4, **characterised in that** the wire manager (2) features at least one wire holder (32) for holding the at least one wire (6) in the predetermined position.

6. Cable terminating assembly (1) according to claim 5, **characterised in that** the at least one wire holder (32) comprises at least one retention blade (36) adapted to at least partially cut into an insulation of the wire (6).

7. Cable terminating assembly (1) according to claim 6, **characterised in that** the at least one retention blade (36) is formed by an electrically insulating material.

8. Cable terminating assembly (1) according to any one of claims 5 to 7, **characterised in that** the at least one wire holder (32) is located opposite the at least one cutting blade (14) in the insertion direction (I).

9. Cable terminating assembly (1) according to any one of claims 5 to 8, **characterised in that** the wire manager (2) features at least two adjacent wire holders (32) which are separated from one another by a separation column (37).

10. Cable terminating assembly (1) according to any one of claims 1 to 9, **characterised in that** the at least one cutting blade (14) is formed by a fibre reinforced material.

11. Cable terminating assembly (1) according to any one of claims 1 to 10, **characterised in that** a first cutting blade (54) is arranged in a first plane (56) essentially perpendicular to the insertion direction (I) and a second cutting blade (58) is arranged in a second plane (60) distanced from the first plane (56) in the insertion direction (I).

12. Cable terminating assembly (1) according to claim 11, **characterised in that** the first cutting blade (54) and second cutting blade (58) are adjacent to one another along the circumference of the connector housing (10).

13. Cable terminating assembly (1) according to any one of claims 1 to 12, **characterised in that** the at least one cutting blade (14) comprised a cutting edge (18) with a bevel angle (66) of about 90°.

14. Cable terminating assembly (1) according to any one of claims 1 to 13, **characterised in that** the connector housing (10) and the at least one cutting blade (14) are formed together as a monolithic component (62).

15. Cable terminating assembly (1) according to any one of claims 1 to 14, **characterised in that** the connector housing (10) is at least partially encased in an outer housing (64).
